# EUROPEAN PATENT APPLICATION

(11) **EP 3 300 013 A1**
(43) Date of publication of application: **28.03.2018**
(21) Application number: 16795779.4
(22) Date of filing: 22.04.2016
(51) Int. Cl.: G06Q 30/04, G06F 19/00

(54) **SELF-ADAPTIVE ELECTRONIC BILL IMPLEMENTATION METHOD AND SYSTEM**

(30) Priority: 20.05.2015 CN 201510257985
(71) Applicant: China Unionpay Co., Ltd, Shanghai 200135 (CN)
(72) Inventor: WANG, Haitao, Shanghai 200135 (CN); YIN, Yawei, Shanghai 200135 (CN); ZHANG, Qi, Shanghai 200135 (CN); LIN, Jiaying, Shanghai 200135 (CN)
(74) Representative: Schneider, Sascha
(86) International application number: PCT/CN2016/079975
(87) International publication number: WO 2016/184292

(57) **Abstract**

A method for adatptively implementing an eNote is provided. The method comprises: entering the information related to fields on the eNote to be generated; determining the template size of the eNote based on the entered information related to fields by the preconfigured computation function, and generating the template of the eNote, wherein the input of the preconfigured computation function is the entered information related to fields, and the output is the template size of the eNote to be generated; and filling in the information corresponding to each of fields on the generated eNote template, thereby producing the final eNote.

## Description

### Technical Field.

The present invention relates to the field of electronic payment, and more particularly, to a technology for implementing eNote.

### Background Art

There are a variety of problems with paper-based notes, e.g., being not easy to be keep by customers, resulting in waste of resources, development demands for current and future mobile Internet payment transactions being not satisfied, and so on. On the contrary, eNotes are paid great attentions in various industries. The importance of making of eNotes, as its integral part, goes without saying.

Traditional methods for making an eNote is to make a note template with a fixed size by measuring the length and width of a note based on a paper-based note in reality, and then fill in various pieces of information from the note.

### Brief Summary of The Invention

With this in mind, the present invention is to provide a method for adaptively implementing an eNote, comprising: entering information related to fields on the eNote to be generated; determining, by a preconfigured computation function, the template size of the eNote based on the entered information related to fields, and generating an eNote template, wherein the input of the preconfigured computation function is the entered information related to fields, and the output is the template size of the eNote to be generated; and filling in the information corresponding to fields, on the generated template of the eNote, thereby producing the final eNote.

Preferably, in which, calculating the template size of the eNote based on the entered field information by the preconfigured computation function comprises: calculating, by a preconfigured computation function, the length and width of each of fields on the eNote to be generated, based on the entered information related to fields; determining the template size of the eNote to be generated, based on the calculated length and width of each of fields, and determining the location of each of fields on the template; and generating the template of the eNote based on the template size and the determined location of each of fields on the template.

Preferably, in which, the method for adaptively implamenting an eNote is based on Java Image implementation or HTML5 Canvas implementation.

According to yet another aspect of the present invention, there is also provided a system for adaptively implementing an eNote, comprising: a database for storing the entered information related to fields on the eNote to be generated; a configuring module for determing, by a preconfigured computation function, the template size of the eNote based on the information related to fields in the database, and generating an eNote template, wherein the input of the preconfigured computation function is the entered information related to fields, and the output is the template size of the eNote to be generated; and a field information reenter module for filling in, by a user, the information corresponding to fields, on the generated template of the eNote, thereby producing the final eNote.

Preferably, according to the system for adaptively implementing the eNote of the present invention, the configuring module includes: a computing unit for calculating, by a preconfigured computation function, the length and width of each of fields on the eNote to be generated, based on the entered information related to fields; a location determining unit for determining the template size of the eNote to be generated, based on the calculated length and width of each of fields, and determining the location of each of fields on the template; and a template generating unit for generating the template of the eNote based on the template size and the determined location of each of fields on the template.

Preferably, according to the system for adaptively implementing the eNote of the present invention, the system is a system based on Java Image or HTML5 Canvas.

### Brief Description of Drawings

Fig. 1 is a flow diagram of a method of adaptively implementing an eNote.
Fig. 2 is an architectural illustration of implementaing the method shown in Fig. 1 based on Java Image.
Fig. 3 is a structural block diagram of a system for adaptively implementaing an eNote according to an example of the present invention.

### Detailed Description of Embodiments

A schematic example of the present invention will now be described with reference to the attached drawings, in which same reference numbers represent same elements throughout. Various embodiments described below are set forth by way of example and not by way of limitation, in order to provide a thorough understanding of the present invention to those skilled in the art. Unless otherwise indicated, terms used herein (including terms used for science, technology and industry) have the same meaning ascommonly understood by one of ordinary skill in the art to which this invention belongs.

According to a traditional method of making an eNote, the note size is fixed. In case where the note itself contains too much content or the content of some information is too long, the fixation of the template size of the note would cause partial overlapping of the information when it is displayed, thereby affecting accuracy and being adverse to addition of extra key information or explanation. Additionally, if there are a great number of categories of the notes to be processed, the note size needs to be measured one by one, which is troublesome.

The present invention focues on providing a method of implementing an eNote that may adaptively produce a note template, and provide interfaces for a user to enter information corresponding to fields on the template, thereby producing the final eNote.

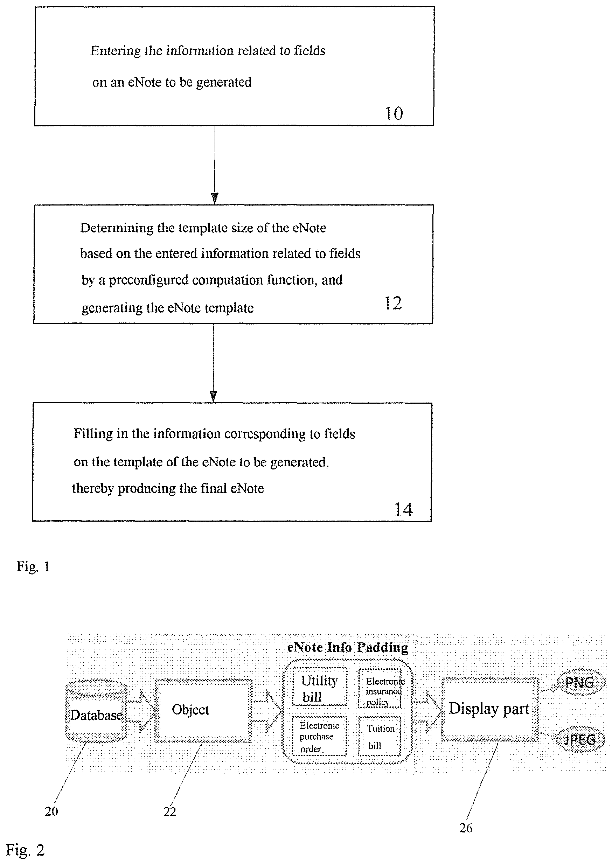

Fig. 1 is a flow diagram of a method of adaptively implementing an eNote. The method according to the present invention is performed in, e.g., an electronic equipment with a data processing capability, wherein the electronic equipment is the electronic equipment such as a computer, a handset, etc., and other equipment not listed here that may perform data processing.

As shown in Fig. 1, at Step 10, the information related to fields involved on the eNote to be generated is entered. Herein, the information related to fields on the eNote refers to the information related to fields on the eNote to be generated. It is assumed that three fields A, B and C are contained on the eNote, wherein field A corresponds to the category of the eNote indicating that the eNote belongs to which kink of eNote, field B corresponds to the amount indicating that how much is the amount, and field C corresponds to the time indicating the expiration date of the note, etc. The information related to field A is the category of the note, the information related to field B is the amount, and the information related to field C is the time.

At Step 12, the template size of the eNote is determined based on the entered information related to fields by the preconfigured computation function, and the template of the eNote is generated, wherein the input of the preconfigured computation function is the entered information related to fields, and the output is the template size of the eNote to be generated. The preconfigured computation function refers to the function that is arranged, in advance, in the equipment for performing the method shown in Fig. 1. As an example, based on the entered information related to field A, i.e., the note category, the function may estimate what area should be arranged with respect to field A, so that the note category can be filled in; based on the entered information related to field B, i.e., the amount, the function may estimate what area should be arranged with respect to field A, so that the note category can be filled in; based on the entered information related to field C, i.e., the time, the function may estimate what area should be arranged with respect to field C, so that the time can be filled in. An so on. After the estimation of the size of each of fields, the template size of an eNote may be determined, in that the eNote template may be determined in such a way that fields may not be overlapped with each other and there is no overlapping between areas calculated for each of fields, preferably each of templates is arranged on the eNote template in a most reasonable manner that is area-saving.

At Step 14, the information corresponding to each of fields is filled in on the generated eNote template, thereby producing the final eNote. After the generation of the eNote template, a user may fill in the note category on a location corresponding to field A (i.e., on the area estimated for field A), fill in the amount on a location corresponding to field B (i.e., on the area estimated for field B), and fill in the date on a location corresponding to field C (i.e., on the area estimated for field C). An so on.

As a more specific example, Step 12 may specifically comprise: calculating, by the preconfigured computation function, the length and width of each of fields in the eNote to be generated, based on the entered information related to fields, e.g., calculating the length and width of the occupied area required for both of the name of field A itself and the content subsequently filled in by the user; determining the template size of the eNote to be generated, based on the calculated length and width of each of fields, and determining the location of each of fields on the template; and generating the template of the eNote based on the template size and the determined location of each of fields on the template.

As an example, the method shown in Fig. 1 may be based on Java Image implementation or HTML5 Canvas implementation, or also on other graph technical implementation.

Java Image is to provide the creation and modification of various classes of images, and use a stream frame to process images. A stream frame relates to an image producer, an optional image filter and an image user, this frame can progressively render the image while the image is acquired and generated.

How to implement the method shown in Fig. 1 will be set forth below in conjunction with Java Image. Fig. 2 is an architectural illustration of implementaing the method shown in Fig. 1 based on Java Image. The field information in the eNote to be generated is entered into a background database 20, based on which, object eNnoteVoucher 22 is created, while the related attribute information, such as heading, comment, etc., upon the display of the note, is defined. The generation of the eNote template is implemented by invoking Image class of awt and introducing java.awt.image package. It is to specifically define class eNoteGenerator and class eNotePanel, and invoke method generate() in class eNoteGenerator, method generate() would further invoke method draw() in class eNotePanel to generate the eNote, method draw() is specifically used to calculate the size and location of each of fields in the note. Subsequently, the generated eNote template may be rendered to the user through the display part eNoteDisplay 26 by invoking method drawImage(). The type of the eNote template is a PNG format or JPEG format and the like, for example.

The method shown in Fig. 1 is performed regardless of whether the eNote is a utility bill or an electronic insurrance policy or an electronic purchase order and others, it is only required that the information related to fields in the note being involved is entered, an eNote template with proper size may be obtained.

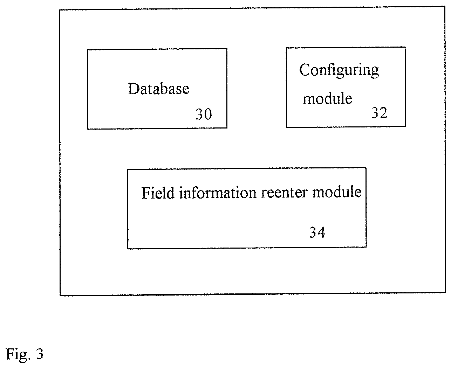

Fig. 3 is a structural block diagram of a system for adaptively implementaing an eNote according to an example of the present invention. The system according to the present invention is arranged in, e.g., an electronic equipment with a data processing capability, wherein the electronic equipment is the electronic equipment such as a computer, a handset, etc., and other equipment not listed here that may perform data processing. As an example, the system for adaptively implementing an eNote includes a database 30, a configuring module 32 and a field information reenter module 34.

The database 30 is used for storing the entered information related to fields on the eNote to be generated. Herein, the information related to fields on the eNote refers to the information related to fields on the eNote to be generated. It is assumed that three fields A, B and C are contained on the eNote, wherein field A corresponds to the category of the eNote indicating that the eNote belongs to which kink of eNote, field B corresponds to the amount indicating that how much is the amount, and field C corresponds to the time indicating the expiration date of the note, etc. The information related to field A is the category of the note, the information related to field B is the amount, and the information related to field C is the time.

The configuring module 32 determines the template size of the eNote based on the information related to fields in the database by the preconfigured computation function, and generates the template of the eNote, wherein the input of the preconfigured computation function is the entered information related to fields, and the output is the template size of the eNote to be generated. The preconfigured computation function refers to the function that is arranged, in advance, in the equipment for performing the method shown in Fig. 1. As an example, based on the entered information related to field A, i.e., the note category, the function may estimate what area should be arranged with respect to field A, so that the note category can be filled in; based on the entered information related to field B, i.e., the amount, the function may estimate what area should be arranged with respect to field A, so that the note category can be filled in; based on the entered information related to field C, i.e., the time, the function may estimate what area should be arranged with respect to field C, so that the time can be filled in. An so on. After the estimation of the size of each of fields, the template size of an eNote may be determined, in that the eNote template may be determined in such a way that fields may not be overlapped with each other and there is no overlapping between areas calculated for each of fields, preferably each of templates is arranged on the eNote template in a most reasonable manner that is area-saving.

The field information reenter module 34 is used for the user to fill in the information corresponding to each of fields on the generated eNote template, thereby producing the final eNote. After the generation of the eNote template, a user may fill in the note category on a location corresponding to field A (i.e., on the area estimated for field A), fill in the amount on a location corresponding to field B (i.e., on the area estimated for field B), and fill in the date on a location corresponding to field C (i.e., on the area estimated for field C). An so on.

In which, the configuring module 32 may include a computing unit, a location determining unit and a template generating unit. The computing unit calculates the length and width of each of fields in the eNote to be generated, based on the entered information related to fields by the preconfigured computation function. The location determining unit determines the template size of the eNote to be generated, based on the calculated length and width of each of fields, and determines the location of each of fields on the template. The template generating unit generates the template of the eNote based on the template size and the determined location of each of fields on the template.

The system for adaptively implementing an eNote shown in Fig. 3 may be based on Java Image or HTML5 Canvas. For example, the database in the system shown in Fig. 3 may be a background database 20 of Java Image. The configuring module 32 may be implemented to specifically function to invoke Image class of awt and introduce java.awt.image packet in order to implement the generation of the eNote template, as described above. The field information reenter module 34 may function to enter with the use of interfaces that is rendered to the user in conjunction with eNoteDisplay 26 shown with respect to Fig. 2 above.

The method according to the present invention is performed or the system according to the present invention is used, regardless of whether the eNote is a utility bill or an electronic insurrance policy or an electronic purchase order and others, it is only required that the information related to fields in the note being involved is entered, an eNote template with proper size may be obtained.

The method shown in Fig. 1 may be implemented in software, hardware or a combination of software and hardware. The system shown in Fig. 3 may be implemented in the form of software module or hardware or a combination of software and hardware.

## Claims

1. A method for adaptively implementing an eNote, comprising:
entering the information related to fields on the eNote to be generated;
determining the template size of the eNote based on the entered information related to fields by the preconfigured computation function, and generating the template of the eNote, wherein the input of the preconfigured computation function is the entered information related to fields, and the output is the template size of the eNote to be generated; and
filling in the information corresponding to each of fields on the generated eNote template, thereby producing the final eNote.

2. The method for adaptively implementing the eNote according to claim 1, wherein calculating the template size of the eNote based on the entered field information by the preconfigured computation function comprises:
calculating the length and width of each of fields in the eNote to be generated, based on the entered information related to fields by the preconfigured computation function;
determining the template size of the eNote to be generated, based on the calculated length and width of each of fields, and determining the location of each of fields on the template;
generating the template of the eNote based on the template size and the determined location of each of fields on the template.

3. The method for adaptively implementing the eNote according to claim 1 or 2, being based on Java Image implementation or HTML5 Canvas implementation.

4. A system for adaptively implementing an eNote, comprising:
a database for storing the entered information related to fields on the eNote to be generated;
a configuring module for determining the template size of the eNote based on the information related to fields in the database by the preconfigured computation function, and generating the template of the eNote, wherein the input of the preconfigured computation function is the entered information related to fields, and the output is the template size of the eNote to be generated;
a field information reenter module for the user to fill in the information corresponding to each of fields on the generated eNote template, thereby producing the final eNote.

5. The system for adaptively implementing the eNote according to claim 4, wherein the configuring module comprises:
a computing unit for calculating the length and width of each of fields in the eNote to be generated, based on the entered information related to fields by the preconfigured computation function;
a location determining unit for determining the template size of the eNote to be generated, based on the calculated length and width of each of fields, and determining the location of each of fields on the template;
a template generating unit for generating the template of the eNote based on the template size and the determined location of each of fields on the template.

6. The system for adaptively implementing the eNote according to claim 1 or 4, wherein the system is a system based on Java Image or HTML5 Canvas.
